# EUROPÄISCHE PATENTSCHRIFT

(11) **EP 1 543 232 B1**
(45) Veröffentlichungstag und Bekanntmachung des Hinweises auf die Patenterteilung: **25.05.2011**
(21) Anmeldenummer: 03750476.8
(22) Anmeldetag: 02.09.2003
(51) Int. Cl.: F02M 25/07, F02B 37/22, F02B 37/24

(54) **BRENNKRAFTMASCHINE MIT EINEM VERDICHTER IM ANSAUGTRAKT**
INTERNAL COMBUSTION ENGINE COMPRISING A COMPRESSOR IN THE INDUCTION TRACT
MOTEUR A COMBUSTION INTERNE COMPORTANT UN COMPRESSEUR DANS LA TUBULURE D'ADMISSION

(30) Priorität: 25.09.2002 DE 10244535
(43) Veröffentlichungstag der Anmeldung: 22.06.2005
(73) Patentinhaber: Daimler AG, 70327 Stuttgart (DE)
(72) Erfinder: SCHMID, Wolfram, 72622 Nürtingen (DE); SUMSER, Siegfried, 70327 Stuttgart (DE)
(74) Vertreter: JENSEN & SON
(86) Internationale Anmeldenummer: PCT/EP2003/009720
(87) Internationale Veröffentlichungsnummer: WO 2004/031564

(56) Entgegenhaltungen:
- DE-A- 4 213 047
- DE-A- 10 049 198
- DE-C- 19 728 353
- DE-C- 19 955 508
- US-B1- 6 301 889

## Beschreibung

In der Druckschrift DE 199 55 508 C1 wird eine aufgeladene Brennkraftmaschine beschrieben, deren Abgasturbolader eine Abgasturbine im Abgasstrang mit variabel einstellbarer Turbinengeometrie und einen Verdichter im Ansaugtrakt umfasst, welcher über eine Welle von der Abgasturbine angetrieben wird und über den angesaugte Verbrennungsluft auf einen erhöhten Ladedruck verdichtet wird. Über die variable Turbinengeometrie ist der wirksame Turbineneintrittsquerschnitt in der Abgasturbine veränderlich einstellbar, wodurch die Möglichkeit besteht, bei unterschiedlichen Last- und Betriebszuständen der Brennkraftmaschine verschiedene Strömungsbedingungen in der Abgasturbine einzustellen und sowohl in der befeuerten Antriebsbetriebsweise als auch im Motorbremsbetrieb optimale Leistungen zu erzielen.

Im Verdichter des Abgasturboladers ist ein Zusatzkanal ausgebildet, welcher sich etwa parallel zum axialen Verdichtereinlasskanal erstreckt, in dem das Verdichterrad drehbar gelagert ist. Der Zusatzkanal mündet in Höhe des Verdichterrades radial von außen in den Verdichtereinlasskanal, so dass über den Zusatzkanal zugeführte Verbrennungsluft unmittelbar auf die Verdichterradschaufeln auftrifft und das Verdichterrad mit einem antreibenden Drehimpuls beaufschlagt. Hierdurch ist es möglich, in bestimmten Betriebszuständen der Brennkraftmaschine - insbesondere bei niedriger Last- und Drehzahl - den Verdichter im Turbinenbetrieb zu betreiben und dem Verdichterrad zusätzliche Drehenergie zuzuführen, wodurch Drehzahlschwankungen im Verdichterbetrieb reduziert werden können. Dieser Eingriff in die Begrenzung der Drehzahlschwankung des Abgasturboladers ist jedoch auf den niederen Last- und Drehzahlbereich der Brennkraftmaschine beschränkt, bei dem der Ansaugdruck im Ansaugtrakt stromab des Verdichters geringer ist als der Umgebungsdruck, wodurch das für den Turbinenbetrieb erforderliche Druckgefälle zustande kommt.

Des Weiteren ist die Brennkraftmaschine aus der DE 199 55 508 C1 mit einer Abgasrückführeinrichtung versehen, welche eine Rückführleitung zwischen dem Abgasstrang stromauf der Abgasturbine und dem Ansaugtrakt stromab des Verdichters umfasst. In der Rückführleitung ist ein einstellbares Sperrventil angeordnet, welches in Betriebszuständen, in denen der Abgasgegendruck den Ansaugdruck übersteigt, geöffnet werden kann, so dass ein Abgasmassenstrom in den Ansaugtrakt geleitet werden kann. Hierdurch kann insbesondere im Teillastbetrieb der Brennkraftmaschine eine Reduzierung der Stickoxide erreicht werden.

Eine weitere aufgeladene Brennkraftmaschine mit Abgasrückführung wird in der DE 198 33 134 C1 beschrieben. Über einen Gasspeicher kann Abgas aus dem Abgasstrang gespeichert und bedarfsweise in den Ansaugtrakt stromauf des Verdichters eingespeist werden, so dass über die Stickoxidreduzierung hinaus auch zusätzliche Antriebsenergie für das Verdichterrad zur Verfügung steht und die Drehzahlschwankungen des Abgasturboladers weiter reduziert werden können. Bei der axialen Anströmung des Verdichterrades mit dem unter Druck stehenden Abgas ist jedoch zu berücksichtigen, dass die Verdichterradschaufeln für eine Kompression des zugeführten Massenstromes ausgelegt sind, wodurch kinetische Energie des Verdichterrades in potenzielle Energie des Gasvolumens stromab des Verdichters umgewandelt wird. Andererseits kann im Turbinenbetrieb des Verdichters die kinetische Energie des anströmenden Massenstromes nur in unzureichender Weise in Antriebsenergie des Verdichterrades umgesetzt werden kann, da die Verdichterradschaufeln nicht für einen Turbinenbetrieb optimiert sind.

Aus der Druckschrift DE 42 13 047 A1 ist ein Verdichter für eine Brennkraftmaschine bekannt, welcher zur Verbreiterung des Verdichterkennfeldes eine so genannte Kennfeldstabilisierende Maßnahme (KSM) aufweist, die die Pumpgrenze im Verdichterkennfeld in Richtung kleinerer Massenströme verschiebt. Die KSM wird dadurch realisiert, dass eine Zirkulationskammer im Verdichtereinlasskanal vorgesehen ist, die sich koaxial zum Verdichtereinlasskanal erstreckt, jedochgegenüber diesem über einen Konturring separiert ist, wobei die Zirkulationskammer im Bereich ihrer beiden Stirnseiten mit dem Verdichtereinlasskanal kommuniziert. Die Zirkulationskammer, die sich axial über die Laufradeintrittsebene des Verdichterrades erstreckt, hat die Funktion, einen auf das Verdichterrad zugeführten Teilmassenstrom entgegen der Hauptströmungsrichtung zurückzuführen und anschließend wieder in die Hauptströmung im Verdichtereinlasskanal einzuleiten. Es entsteht hierdurch eine Ringströmung, die die besagte Pumpgrenzenverschiebung bewirkt. Damit sich die Ringströmung ausbilden kann, ist der Konturring in Achsrichtung verhältnismäßig kurz ausgeführt und besitzt verhältnismäßig große Strömungsöffnungen im Bereich seiner beiden Stirnseiten.

Die Zirkulationskammer kann zur Schaffung eines vergrößerten Puffervolumens mit diversen Gas enthaltenden Bauteilen der Brennkraftmaschine verbunden werden, beispielsweise mit dem Kurbelgehäuse, dem Luftfilter oder der Abgasrückführung. In jedem Fall ist es Aufgabe dieser zusätzlichen Anbindung, das Volumen der Zirkulationskammer zu vergrößern. Dieses zusätzliche Puffervolumen bewirkt ein Abmildern von Druckstößen.

Der Erfindung liegt das Problem zugrunde, den Wirkungsgrad und die Betriebssicherheit von aufgeladenen Brennkraftmaschinen zu verbessern. Es sollen insbesondere geringere Drehzahlschwankungen im Abgasturbolader der Brennkraftmaschine erreicht werden.

Dieses Problem wird erfindungsgemäß mit den Merkmalen des Anspruches 1 gelöst. Die Unteransprüche geben zweckmäßige Weiterbildungen an.

Erfindungsgemäß ist die Abgasrückführeinrichtung der Brennkraftmaschine mit dem Verdichter in der Weise gekoppelt, dass Abgas aus dem Abgasstrang in einen Zusatzkanal des Verdichters eingeleitet werden kann. Dieser Zusatzkanal ist separat vom axialen Verdichtereinlasskanal ausgeführt, über den der Hauptmassenstrom der Verbrennungsluft auf das Verdichterrad geleitet und durch die Rotation des Rades auf den erhöhten Ladedruck komprimiert wird. Die separate Ausbildung des Zusatzkanals, der insbesondere druck- und strömungsdicht gegenüber dem axialen Verdichtereinlasskanal abgedichtet ist, ermöglicht eine gezielte Anströmung des Verdichterrades mit den Abgasen aus dem Abgasstrang, derart, dass die Verdichterradschaufeln mit einem Drehimpuls beaufschlagt werden und die Abgasenergie in wirksamer Weise in Rotationsenergie des Verdichterrades umgesetzt werden kann. Die Abgasrückführung dient als Antriebsquelle für das Verdichterrad, wobei der Wirkungsgrad im Unterschied zu Ausführungen aus dem Stand der Technik auf Grund der gezielteren Anströmung des Verdichterrades entscheidend verbessert ist.

Durch die unmittelbare Einspeisung des Abgases in den Zusatzkanal des Verdichters wird der Vorteil der Stickoxidreduktion als Folge der Abgasrückführung mit dem Vorteil der Reduzierung der Drehzahlschwankung im Abgasturbolader verbunden. Die Abgasrückführung in den Zusatzkanal wird verstärkt insbesondere in Betriebszuständen der Brennkraftmaschine mit kleinen Lasten und/oder Drehzahlen durchgeführt, bei denen auf Grund des geringen Ansaugdrucks im Ansaugtrakt eine die Abgasrückführung unterstützende Druckdifferenz zwischen Abgasstrang und Ansaugtrakt herrscht. Im niedrigen Last-/Drehzahlbereich der Brennkraftmaschine, in welchem der benötigte Ansaugdruck unter dem Umgebungsdruck liegt, kann über den Zusatzkanal zusätzlich zu dem Abgas auch Verbrennungsluft eingespeist werden, die auf Grund der Druckdifferenz zwischen Umgebungsdruck und Ladedruck das Verdichterrad mit einem antreibenden Drehimpuls beaufschlagt, so dass das Verdichterrad im Turbinenbetrieb gefahren wird; diese Betriebsweise kann auch als Kaltluft-Turbinenbetrieb bezeichnet werden.

Erfindungsgemäß befindet sich im Mündungsbereich des Zusatzkanals in den Verdichtereinlasskanal eine Dralleinrichtung, über die der über den Zusatzkanal zugeführte Massenstrom mit einem Drall beaufschlagt wird, unter dem der Massenstrom auf das Verdichterrad auftrifft und der eine bessere Umsetzung der kinetischen Energie des zugeführten Massenstromes in Rotationsenergie des Verdichterrades ermöglicht. Die Dralleinrichtung ist verstellbar ausgeführt, zweckmäßig zwischen einer den Mündungsquerschnitt maximierenden Öffnungsposition und einer den Mündungsquerschnitt absperrenden Schließposition. Über die Einstellung der Dralleinrichtung kann der den Zusatzkanal durchströmende Abgasmassenstrom reguliert werden, so dass prinzipiell auf ein Abgasrückführventil in der Abgasrückführeinrichtung verzichtet werden kann. Andererseits kann es aber zweckmäßig sein, ein derartiges Abgasrückführventil zusätzlich zu der verstellbaren Dralleinrichtung vorzusehen, was den Vorteil bietet, dass Betriebszustände einstellbar sind, in welchen die Rückführung von Abgas in den Abgasstrang unterbunden wird, zugleich aber Verbrennungsluft über den Zusatzkanal auf das Verdichterrad geleitet wird und der Verdichter im Kaltluft-Turbinenbetrieb betrieben wird.

Der Zusatzkanal verläuft vorteilhaft radial nach außen versetzt zum Verdichtereinlasskanal und erstreckt sich parallel zu diesem. Der Mündungsbereich liegt zweckmäßig axial im Bereich des Verdichterrades, wobei der Zusatzkanal insbesondere radial in den Verdichtereinlasskanal einmündet, so dass der durch den Zusatzkanal geleitete Massenstrom unter Berücksichtigung des über die Dralleinrichtung erzeugten Dralls in einer einen Drehimpuls auf das Verdichterrad übertragenden Weise auf Letzteres auftrifft.

Erfindungsgemäß ist die Dralleinrichtung verstellbar und besteht aus einem feststehenden Drallgitter, welches den Mündungsbereich überdeckt, sowie einem verstellbaren Axialschieber, der in den Mündungsbereich einschiebbar ist und hierdurch den Mündungsquerschnitt verschließt.

Der Verdichter ist bevorzugt Teil eines Abgasturboladers, wobei die Abgasturbine gegebenenfalls mit einer variabel einstellbaren Turbinengeometrie zur Einstellung des Turbineneintrittsquerschnitts ausgestattet sein kann. Grundsätzlich ist es aber auch möglich, den Verdichter unabhängig von einer Abgasturbine anzutreiben, beispielsweise über einen Elektromotor; in diesem Fall wird eine Abgasturbine nicht benötigt.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Ansicht einer aufgeladenen Brennkraftmaschine mit Abgasrückführeinrichtung, wobei die Rückführleitung der Abgasrückführeinrichtung mit einem Zusatzkanal im Verdichter verbunden ist,
- Fig. 2: einen Schnitt durch den Verdichter mit axialem Verdichtereinlasskanal, in welchem ein Verdichterrad drehbar angeordnet ist, sowie einem radial außenliegenden Zusatzkanal.

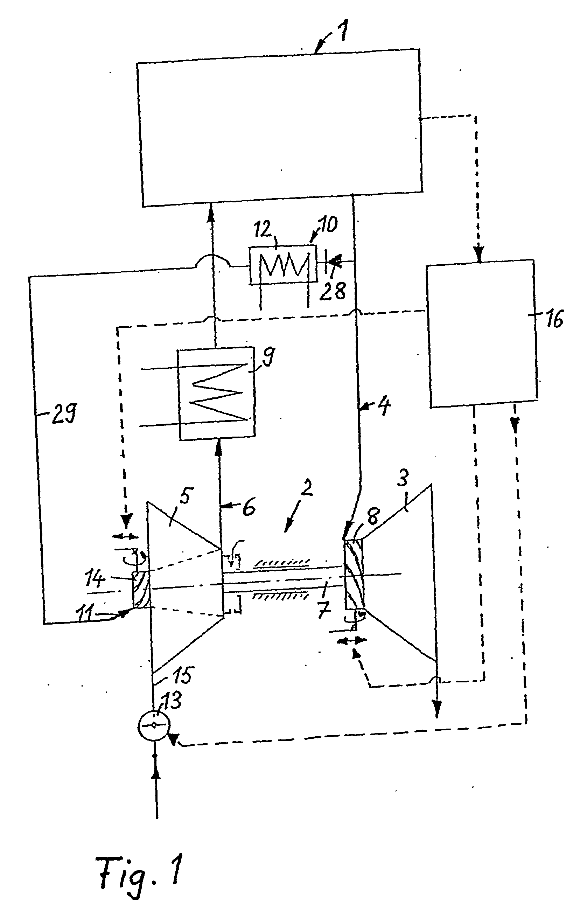

Bei der in Fig. 1 dargestellten Brennkraftmaschine 1 handelt es sich um einen Ottomotor oder alternativ um eine DieselBrennkraftmaschine. Der Brennkraftmaschine 1 ist ein Abgasturbolader 2 mit einer Abgasturbine 3 im Abgasstrang 4 und einem Verdichter 5 im Ansaugtrakt 6 zugeordnet, dessen Verdichterrad über eine Welle 7 mit dem Turbinenrad verbunden ist, welches von den unter Druck stehenden Abgasen im Abgasstrang zwischen Brennkraftmaschine 1 und Abgasturbine 3 angetrieben wird. Die Abgasturbine 3 ist mit einer variabel einstellbaren Turbinengeometrie ausgestattet, über die der wirksame Turbineneintrittsquerschnitt in Abhängigkeit von Zustands- und Betriebsgrößen der Brennkraftmaschine sowie den weiteren, der Brennkraftmaschine zugeordneten Aggregaten einstellbar ist.

Die von dem Verdichter 5 angesaugte und auf einen erhöhten Druck komprimierte Verbrennungsluft wird stromab des Verdichters in einem Ladeluftkühler 9 gekühlt und anschließend unter Ladedruck den Zylindern der Brennkraftmaschine 1 zugeführt.

Des Weiteren ist eine Abgasrückführeinrichtung 10 vorgesehen, die eine Rückführleitung 29 zwischen dem Abgasstrang 4 stromauf der Abgasturbine 3 und dem Ansaugtrakt umfasst, wobei in der Rückführleitung 29 ein Wärmetauscher 12 sowie ein Rückführventil 28 angeordnet sind. Bei dem Rückführventil 28 kann es sich um ein einstellbares Ventil handeln, welches zwischen einer Sperrposition und einer Offenposition zu verstellen ist, oder aber auch um ein passives, nicht verstellbares Ventil, beispielsweise um ein Flatterventil. Die Rückführleitung 29 mündet in einen Zusatzkanal 11, welcher Bestandteil des Verdichters 5 ist und insbesondere im Gehäuse des Verdichters ausgebildet ist. Der Zusatzkanal 11 mündet in den axialen Verdichtereinlasskanal, in welchem das Verdichterrad drehbar gelagert ist. Im Mündungsbereich von Zusatzkanal 11 zu Verdichtereinlasskanal ist ein Drallgitter 14 angeordnet, über das der zugeführte Abgasmassenstrom mit einem Drall beaufschlagt wird, unter dem der Massenstrom auf das Verdichterrad im Verdichtereinlasskanal auftrifft und diesem einen antreibenden Drehimpuls versetzt.

Im regulären Betrieb des Verdichters 5 wird diesem über einen Leitungsabschnitt 15 Verbrennungsluft aus der Umgebung zugeführt, wobei der Leitungsabschnitt 15 in den Verdichtereinlasskanal mündet, gegebenenfalls auch Teil des Verdichtereinlasskanals sein kann. Im Leitungsabschnitt 15 ist ein einstellbares Sperrorgan 13, beispielsweise eine Drosselklappe, angeordnet, über die der zuzuführende Verbrennungsluftstrom in den Verdichter 5 zu regulieren ist.

Es kann zweckmäßig sein, vom Leitungsabschnitt 15 stromauf des Verdichters 5 eine Bypassleitung in den Zusatzkanal 11 abzweigen zu lassen, damit dem Zusatzkanal 11 zusätzlich und/oder alternativ zu den Abgasen auch Verbrennungsluft zuführbar ist. Diese Bypassleitung ist vorteilhaft ebenfalls über ein einstellbares Sperrorgan zu regulieren.

Weiterhin ist der Brennkraftmaschine 1 eine Regel- und Steuereinheit 16 zugeordnet, über die die einstellbaren Aggregate der Brennkraftmaschine - variable Turbinengeometrie 8, Drallgitter 14, Sperrorgan 13 und gegebenenfalls Rückführventil 28 - einzustellen sind.

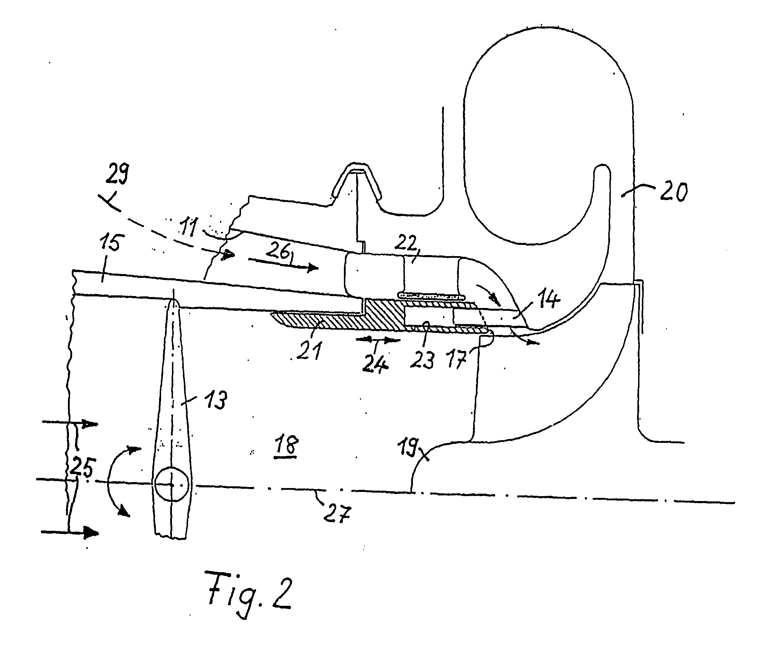

Der Schnittdarstellung gemäß Fig. 2 ist zu entnehmen, dass die Verbrennungsluft axial gemäß Pfeilrichtung 25 in den Verdichtereinlasskanal 18 eingeleitet wird, in welchem sich das einstellbare Sperrorgan 13 befindet und außerdem das Verdichterrad 19 drehbar gelagert ist. Nach dem Passieren des Verdichterrades 19 wird die komprimierte Verbrennungsluft radial in einen Diffusor 20 geleitet, aus dem die Verbrennungsluft in den Ladeluftkühler im Ansaugtrakt zur Kühlung abgeleitet und im weiteren Verlauf den Zylindern der Brennkraftmaschine zugeführt wird.

Etwa parallel zum Verdichtereinlasskanal 18 verläuft der Zusatzkanal 11, der jedoch gegenüber dem Verdichtereinlasskanal 18 radial nach außen versetzt ist. Über den Zusatzkanal 11 strömt in Pfeilrichtung 26 das zugeführte Abgas aus der Abgasrückführleitung 29, gegebenenfalls auch Verbrennungsluft. Der Zusatzkanal 11 mündet in Höhe des Verdichterrades 19 in den Verdichtereinlasskanal 18, wobei im Mündungsbereich 17 der Zusatzkanal 11 radial ausgerichtet ist, so dass der zugeführte Massenstrom im Wesentlichen radial und damit etwa vertikal zur Längsachse 27 des Verdichters auf die Verdichterradschaufeln auftrifft.

Zur Verstärkung des auf das Verdichterrad zu übertragenden Drehimpulses ist im Mündungsbereich 17 ein Drallgitter 14 angeordnet, bei dessen Durchströmen der über den Zusatzkanal 11 zugeführte Massenstrom einen zusätzlichen Drall erfährt. Das Drallgitter 14 bildet gemeinsam mit einem Axialschieber 21 eine verstellbare Dralleinrichtung, über die der Mündungsquerschnitt zwischen einer Offenstellung und einer Schließstellung zu verstellen ist, wobei in Schließstellung der Mündungsquerschnitt zweckmäßig vollständig abgesperrt ist. Der Axialschieber 21 ist an einem Lagerelement 22 verschieblich gehalten und in Pfeilrichtung 24 zwischen seiner Offenstellung und seiner Schließstellung zu verschieben. Im Bereich einer axialen Stirnseite besitzt der Axialschieber 21 eine Aufnahmeöffnung 23, in welcher das Drallgitter 14 in der Schließposition des Axialschiebers 21 aufgenommen ist.

## Patentansprüche

1. Brennkraftmaschine mit einem Verdichter im Ansaugtrakt, mit einem in einem Verdichtereinlasskanal (18) drehbar gelagerten Verdichterrad (19), über das zugeführte Verbrennungsluft auf einen erhöhten Ladedruck komprimierbar ist, und mit einem Zusatzkanal (11), der in den Verdichtereinlasskanal (18) einmündet, und mit einer Abgasrückführeinrichtung (10) mit einer Rückführleitung (29) zum Überleiten eines einstellbares Abgasmassenstromes vom Abgasstrang (4) in den Ansaugtrakt (6), wobei die Rückführleitung (29) mit dem Zusatzkanal (11) im Verdichter (5) verbunden ist, und im Mündungsbereich (17) des Zusatzkanals (11) im Verdichtereinlasskanal (18) eine Dralleinrichtung (14, 21) angeordnet ist, wobei die Dralleinrichtung (14, 21) verstellbar ausgebildet ist,
**dadurch gekennzeichnet,**
**dass** die Dralleinrichtung ein Drallgitter (14) im Mündungsbereich (17) und einen zwischen einer Öffnungsposition und einer Schließposition verstellbaren Axialschieber (21) umfasst, der in Schließposition in den Mündungsbereich (17) eingeschoben ist.

2. Brennkraftmaschine nach Anspruch 1,
**dadurch gekennzeichnet,**
**dass** in der Stirnseite des Axialschiebers (21) eine Aufnahmeöffnung (23) zur Aufnahme des Drallgitters (14) in Schließposition eingebracht ist.

3. Brennkraftmaschine nach Anspruch 1 oder 2,
**dadurch gekennzeichnet**
**dass** der Zusatzkanal (11) in Höhe des Verdichterrades (19) in den Verdichtereinlasskanal (18) einmündet.

4. Brennkraftmaschine nach einem der Ansprüche 1 bis 3,
**dadurch gekennzeichnet,**
**dass** im Verdichtereinlasskanal (18) stromauf des Verdichterrades (19) ein einstellbares Sperrorgan (13) angeordnet ist.

5. Brennkraftmaschine nach einem der Ansprüche 1 bis 4,
**dadurch gekennzeichnet,**
**dass** in der Abgasrückführleitung (29) ein Rückführventil (28) angeordnet ist.

6. Brennkraftmaschine nach einem der Ansprüche 1 bis 5,
**dadurch gekennzeichnet,**
**dass** der Verdichter (5) Teil eines Abgasturboladers (2) ist, dessen Abgasturbine (3) mit einer variablen Turbinengeometrie (8) zur veränderlichen Einstellung des wirksamen Turbineneintrittsquerschnitts ausgestattet ist.

## Claims

1. Internal combustion engine comprising a compressor in the induction tract, with a compressor impeller (19) rotatably mounted in a compressor inlet duct (18), by means of which fed-in combustion air can be compressed to an increased boost pressure, and with an auxiliary duct (11) terminating into the compressor inlet duct (18), and with an exhaust gas recirculation device (10) comprising a recirculation line (29) for directing an adjustable exhaust gas mass flow from the exhaust train (4) into the induction tract (6), wherein the recirculation line (29) is connected to the auxiliary duct (11) in the compressor (5) and a swirl device (14, 21) is provided in the termination region (17) of the auxiliary duct (11) in the compressor inlet duct (18), wherein the swirl device (14, 21) is designed to be adjustable,
**characterised in that**
the swirl device comprises a swirl grid (14) in the termination region (17) and an axial slide (21) adjustable between an open position and a closed position, which is pushed into the termination region (17) in the closed position.

2. Internal combustion engine according to claim 1,
**characterised in that**
a location opening (23) for the accommodation of the swirl grid (14) in the closed position is provided in the end face of the axial slide (21).

3. Internal combustion engine according to claim 1 or 2,
**characterised in that**
the auxiliary duct (11) terminates into the compressor inlet duct (18) at the level of the compressor impeller (19).

4. Internal combustion engine according to any of claims 1 to 3,
**characterised in that**
an adjustable blocking element (13) is provided in the compressor inlet duct (18) upstream of the compressor impeller (19).

5. Internal combustion engine according to any of claims 1 to 4,
**characterised in that**
a recirculation valve (28) is provided in the exhaust gas recirculation line (29).

6. Internal combustion engine according to any of claims 1 to 5,
**characterised in that**
the compressor (5) is a part of a turbocharger (2), the exhaust gas turbine (3) of which has a variable turbine geometry (8) for the variable adjustment of the effective turbine inlet cross-section.

## Revendications

1. Moteur à combustion interne, muni d'un compresseur placé dans la tubulure d'admission, présentant une roue (19) de compresseur montée rotative dans un canal d'admission (18) du compresseur, qui permet de comprimer, à une pression d'admission élevée, l'air de combustion, et d'un canal additionnel (11) qui débouche dans le canal d'admission (18) du compresseur, ainsi qu'un dispositif de retour des gaz d'échappement (10) comportant une conduite de retour (29) qui permet de transférer un flux massique de gaz d'échappement ajustable, de la conduite (4) de gaz d'échappement à la tubulure d'admission (6), la conduite de retour (29) étant reliée au canal additionnel (11) dans le compresseur, et un dispositif à tourbillon (14, 21) se trouvant dans la zone d'embouchure (17) du canal additionnel (11) dans le canal d'admission (18) du compresseur, ledit dispositif à turbulence (14, 21) est conçu de façon à pouvoir être réglé, **caractérisé en ce que** le dispositif à turbulence comprend une grille à turbulence (14) dans la zone d'embouchure (17) et une coulisse axiale (21) réglable entre une position ouverte et une position fermée, qui est insérée en position fermée dans la zone d'embouchure (17).

2. Moteur à combustion interne selon la revendication 1, **caractérisé en ce que** la face frontale de la coulisse axiale (21) comporte une ouverture de réception (23) destinée à recevoir la grille à turbulence (14) en position fermée.

3. Moteur à combustion interne selon la revendication 1 ou 2, **caractérisé en ce que** le canal additionnel (11) débouche à la hauteur de la roue (19) de compresseur dans le canal d'admission (18) du compresseur.

4. Moteur à combustion interne selon l'une quelconque des revendications 1 à 3, **caractérisé en ce que** le canal d'admission (18) du compresseur comporte un organe de blocage (13) réglable en amont de la roue (19) de compresseur.

5. Moteur à combustion interne selon l'une quelconque des revendications 1 à 4, **caractérisé en ce qu'**une soupape de retour (28) est placée dans la conduite de retour de gaz d'échappement (29).

6. Moteur à combustion interne selon l'une quelconque des revendications 1 à 5, **caractérisé en ce que** le compresseur (5) est une partie du turbocompresseur (2), dont la géométrie variable (8) de la turbine (3) à gaz d'échappement sert à ajuster de manière modulée la section transversale d'entrée active de la turbine.
